# EUROPÄISCHE PATENTANMELDUNG

(11) **EP 4 450 564 A2**
(43) Veröffentlichungstag der Anmeldung: **23.10.2024**
(21) Anmeldenummer: 24173284.1
(22) Anmeldetag: 26.03.2018
(51) Int. Cl.: C08L 101/16

(54) **BIOLOGISCH ABBAUBARE FOLIE**

(30) Priorität: 05.04.2017 DE 102017003340
(62) Teilanmeldung aus: 18713654.4
(71) Anmelder: bio-tec Biologische Naturverpackungen GmbH & Co. KG, 46446 Emmerich (DE)
(72) Erfinder: SCHMIDT, Harald, 46446 Emmerich (DE); MATHAR, Johannes, 7041 GP's-Heerenberg (NL); ROLOFF, Thorsten, 40789 Monheim (DE); FRIEDEK, Wolfgang, 47551 Bedburg-Hau (DE)
(74) Vertreter: Cohausz & Florack

(57) **Zusammenfassung**

Dargestellt und beschrieben wird eine Folie enthaltend 10 bis 50 Gew.-% einer Komponente A und 50 bis 90 Gew.-% einer Komponente B, bezogen auf die Summe der Komponenten A und B, wobei Komponente A ausgewählt ist aus der Gruppe bestehend aus Polymeren, die aus ringöffnender Polymerisation erhältlich sind und eine Glasübergangstemperatur (Tg) niedriger als -30 °C haben und
Komponente B ausgewählt ist aus der Gruppe bestehend aus thermoplastischen aliphatischen Copolyestern und Mischungen davon,
wobei die Folie eine Gesamtdicke von 1 bis 200 µm aufweist.

## Beschreibung

Die Erfindung betrifft eine Folie sowie ein Verfahren zu deren Herstellung. Ferner betrifft die Erfindung die Verwendung eines Polymerblends zur Herstellung einer Folie. Außerdem betrifft die Erfindung Transportbeutel.

Die Belastung der Weltmeere durch Plastikmüll ist ein bereits seit Jahrzehnten bekanntes und bis heute ungelöstes Problem. Vor allem für die Tiere im Meer stellt Plastik ein großes Problem dar. Die Tiere verfangen sich in größeren Plastikteilen und verwechseln kleine Plastikteile mit Nahrung, die sie nicht verdauen können. Vor allem besonders kleine Plastikteile, sogenanntes Mikroplastik, werden von Tieren über die Nahrung aufgenommen und landen so auch in der Nahrungskette der Menschen.

Ein großer Teil der in den Weltmeeren vorhandenen Plastikteile stammt von Kunststofftragetaschen ("Plastikbeuteln"), wie sie im täglichen Gebrauch, etwa zum Einkaufen, Verwendung finden. Die Begriffe "Kunststoff" und "Plastik" werden im Folgenden synonym verwendet.

Recycling, nachhaltiges Nutzen von Kunststoffprodukten und die Säuberung der Weltmeere stellen Ansätze dar, die zu einer Reduktion der Menge an Plastik in den Weltmeeren beitragen sollen. Die sicherste und nachhaltigste Lösung wäre aber, Plastikprodukte herstellen zu können, die unter den natürlichen Bedingungen, die in den Weltmeeren vorliegen, biologisch abgebaut werden.

Der biologische Abbau von Kunststoffprodukten im natürlichen Meerwasser (Salzwasser) ist wesentlich langwieriger und problematischer als der biologische Abbau in aktiven Medien wie Kompost bzw. bei höheren Temperaturen, wie sie in industriellen Kompostieranlagen vorliegen. Zum einen weist Kompost eine besonders hohe Konzentration von am Abbau beteiligten Mikroorganismen auf. Zum anderen haben industrielle Kompostieranlagen genau kontrollierte Bedingungen (z.B. Temperatur, Sauerstoffkonzentration), die einen optimalen biologischen Abbau des Komposts gewährleisten. Der Anspruch an Kunststoffprodukte, die sich in den natürlichen Bedingungen der Weltmeere biologisch abbauen lassen, ist somit ungleich höher als für andere Abbaubedingungen.

Hinzu kommt, dass Kunststoffprodukte neben einer guten biologischen Abbaubarkeit unter den natürlichen Bedingungen der Weltmeere auch noch anwendungsspezifische mechanische Eigenschaften aufweisen müssen. So müssen Transportbeutel aus Kunststoff beispielsweise ausreichende Zugfestigkeits- und Reißdehnungswerte aufweisen, um bestimmungsgemäß im Alltag gebraucht werden zu können. Nur dann kommen diese als Ersatz für traditionelle, biologisch nicht abbaubare Plastikprodukte in Betracht.

Die Kombination von (a) guter biologischer Abbaubarkeit einer Kunststofffolie in Meerwasser einerseits und (b) guten mechanischen Eigenschaften einer Kunststofffolie andererseits stellt sich in der Praxis als außerordentlich schwierig heraus. Bisherige Ansätze, diese beiden scheinbar gegensätzlichen Eigenschaften einer Folie in Einklang miteinander zu bringen, waren nur bedingt erfolgreich.

Die EP 2 913 362 A1 beschreibt eine Folie umfassend Polyhydoxyalkanoate und Polylactide, die einen verbesserten biologischen Abbau in einer Umwelt mit Mikroorganismen aufweist und gleichzeitig gute Lagerungsbeständigkeit, Festigkeit und Flexibilität besitzt. Der biologische Abbau ist allerdings nicht optimiert auf die besonders anspruchsvollen Abbaubedingungen in natürlichem Meerwasser.

Die EP 1 008 629 A1 beschreibt einen biologisch abbaubaren Polyesterharz umfassend 100 Gewichtsteile eines aliphatischen Polyesterharzes und 1-200 Gewichtsteile Polycaprolacton. Aus diesem Polymergemisch können eine Vielzahl von unterschiedlichen, biologisch abbaubaren Produkten hergestellt werden. Allerdings ist die biologische Abbaubarkeit nicht auf die besonders anspruchsvollen Abbaubedingungen in natürlichem Meerwasser eingestellt.

Keine der beschriebenen Folien löst zugleich das Problem der besonderen Herausforderung des biologischen Abbaus im Meerwasser und weist trotzdem zufriedenstellende mechanische Eigenschaften auf.

Ausgehend von dem zuvor beschriebenen Stand der Technik besteht die Aufgabe der Erfindung darin, eine Folie bereitzustellen, die eine sehr gute biologische Abbaubarkeit in Meerwasser aufweist und gleichzeitig hervorragende mechanische Eigenschaften aufweist. Vorzugsweise soll sich die Folie nach deren Einbringung in Meerwasser - gleichzeitig mit, vor oder nach Beginn des biologischen Abbaus der Folie(nteile) zu Kohlenstoffdioxid und Wasser - in kleinere Partikel zersetzen. Die Erfindung setzt sich außerdem zum Ziel, eine Folie bereitzustellen, die besonders geeignet ist zur Herstellung von Transportbeuteln.

Diese Aufgaben werden ganz oder teilweise durch die in Satz 1 angegebene Folie, die in Satz 27 angegebene Verwendung, das in Satz 30 angegebene Erzeugnis und das in Satz 33 angegebene Verfahren gelöst.

Vorteilhafte Ausgestaltungen der Erfindung sind in den abhängigen Sätzen angegeben und werden nachfolgend wie der allgemeine Erfindungsgedanke im Einzelnen erläutert.

Die erfindungsgemäße Folie zeichnet sich dadurch aus, dass diese 10 bis 50 Gew.-% einer Komponente A und 50 bis 90 Gew.-% einer Komponente B, bezogen auf die Summe der Komponenten A und B, enthält, wobei Komponente A ausgewählt ist aus der Gruppe bestehend aus Polymeren, die aus ringöffnender Polymerisation erhältlich sind und eine Glasübergangstemperatur (Tg) niedriger als -30°C haben und Komponente B ausgewählt ist aus der Gruppe bestehend aus thermoplastischen aliphatischen Copolyestern und Mischungen davon, wobei die Folie eine Gesamtdicke von 1 bis 200 um aufweist.

Überraschend hat sich gezeigt, dass die erfindungsgemäßen Folien sowohl hervorragende mechanische Eigenschaften wie hohe Zugfestigkeit und/oder hohe Reißdehnung und eine sehr gute biologische Abbaubarkeit in natürlichem Meerwasser aufweisen.

Ohne an eine wissenschaftliche Theorie gebunden sein zu wollen, erscheint die überraschende Wirkung der Erfindung auf die besonderen Eigenschaften der Kombination der Komponenten A und B zurückzuführen zu sein. Umfangreiche experimentelle Studien waren erforderlich, um geeignete Bestandteile und Verhältnisse für die Komponenten A und B zu finden. Wenn andere als die für die Komponenten A und B definierten Polymere miteinander kombiniert wurden, so wiesen die daraus hergestellten Folien entweder unzureichende mechanische Eigenschaften auf oder aber die biologische Abbaubarkeit der Folie in Meerwasser war unzureichend. Ferner ist es für die biologische Abbaubarkeit in Meerwasser und die mechanischen Eigenschaften der Folien unverzichtbar, dass das richtige Mengenverhältnis der Komponenten A und B gewählt wird.

Vorzugsweise weist die Folie mindestens eine der folgenden mechanischen Eigenschaften auf:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527.

Die vorgenannten mechanischen Eigenschaften werden vorzugsweise gemäß EN ISO 527-3:2003-07 bestimmt.

Vorteilhafterweise weist die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts auf und/oder mindestens 30% des organischen Kohlenstoffs der Folie sind nach Einbringen in Salzwasser innerhalb von 180 Tagen bei einer Temperatur von 30 ± 2°C, gemäß der Methode ASTM D6691-09, in Kohlenstoffdioxid umgesetzt.

Die Messung des Abbaus in Salzwasser nach kontrollieren Testbedingungen gemäß ASTM D6691-09 erfolgt vorzugsweise an Folien mit einer Dicke von 1 bis 100 µm, insbesondere von 10 bis 40 pm, noch bevorzugt mit einer Dicke von etwa 20 pm.

Gemäß einer bevorzugten Ausführungsform enthält die Folie 10 bis 50 Gew.-% einer Komponente A und 50 bis 90 Gew.-% einer Komponente B, bezogen auf die Summe der Komponenten A und B, wobei Komponente A ausgewählt ist aus der Gruppe bestehend aus Polymeren, die aus ringöffnender Polymerisation erhältlich sind und eine Glasübergangstemperatur (Tg) niedriger als -30°C haben und Komponente B ausgewählt ist aus der Gruppe bestehend aus thermoplastischen aliphatischen Copolyestern und Mischungen davon, wobei die Folie eine Gesamtdicke von 1 bis 200 um sowie mindestens eine der folgenden mechanischen Eigenschaften aufweist:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527;
und wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2 °C, gemäß der Methode ASTM D6691-09, in Kohlenstoffdioxid umgesetzt sind.

Die erfindungsgemäße Folie enthält eine Komponente A, die ausgewählt ist aus der Gruppe bestehend aus Polymeren, die aus ringöffnender Polymerisation erhältlich sind und eine Glasübergangstemperatur (Tg) niedriger als -30°C haben.

Methoden zur Bestimmung der Glasübergangstemperatur sind dem Fachmann bekannt. Beispielsweise kann die Glasübergangstemperatur mittels dynamischer Differenzkalorimetrie (Differential Scanning Calorimetry, DSC) bestimmt werden. Wird eine Polymerprobe einem definierten Aufheiz-/Abkühlprogramm unterzogen, so kann die Glasübergangstemperatur als Stufe im DSC Diagramm erkannt werden.

Für die Messung wird üblicherweise ein Temperaturprogramm, das aus einem Aufheiz-Abkühl-Aufheiz-Zyklus besteht, verwendet. Bei diesem Temperaturprogramm kann die Probe zunächst auf einer voreingestellten Anfangstemperatur für 2 bis 5 min equilibriert werden. Nach dieser ersten Equilibrierphase wird die Probe mit einer gleichbleibenden Aufheizrate bis zu einer voreingestellten ersten Zieltemperatur erhitzt. Üblicherweise wird eine Aufheizrate von 10 °C/min eingesetzt. Bei der ersten Zieltemperatur kann die Probe nochmals für 2 bis 5 min equilibriert und anschließend mit einer konstanten Abkühlrate bis zu einer voreingestellten zweiten Zieltemperatur gekühlt werden. Üblicherweise wird eine Abkühlrate von 10 °C/min eingesetzt. Bei der zweiten Zieltemperatur kann die Probe nochmals für 2 bis 5 min equilibriert und anschließend mit einer gleichbleibenden Aufheizrate bis zu einer voreingestellten dritten Zieltemperatur erhitzt werden, auf welcher die Probe für 2 bis 5 min konstant gehalten werden kann, bevor die Messung beendet wird. Üblicherweise wird die gleiche Aufheizrate wie bei der ersten Aufheizphase, z.B. 10 °C/min, eingesetzt. Die erste und die dritte Zieltemperatur können gleich oder verschieden sein, ebenso können die Anfangs- und die zweite Zieltemperatur gleich oder verschieden sein.

Als Glasübergangstemperatur wird insbesondere die Mittenpunktstemperatur T_{mg} der Stufe des zweiten Aufheizschritts im DSC Diagramm angegeben, wobei die Messung mit Aufheiz- und Abkühlraten von jeweils 10 °C/min und einer Equilibrierzeit an den Temperaturendpunkten von jeweils 2 Minuten durchgeführt wurde. Die Mittenpunktstemperatur T_{mg} ist beispielsweise in dem Lehrbuch "Praxis der Thermischen Analyse von Kunststoffen" von Gottfried W. Ehrenstein, Gabriela Riedel, Pia Trawiel, 2. Auflage, Carl Hanser Verlag, München 2003, Seite 9, definiert.

Wenn hier oder an anderer Stelle von Polymeren die Rede ist, die aus ringöffnender Polymerisation erhältlich sind, so sind damit Polymere gemeint, bei denen die Kettenpolymerisation eines zyklischen Monomers zum Polymer führt. Das zyklische Monomer kann vorzugsweise ein zyklischer Ester, ein zyklischer Ether, ein zyklisches Amid und/oder ein zyklisches Alken sein. Die Kettenpolymerisation des Monomers kann vorzugsweise katalytisch und/oder thermisch durchgeführt werden. Ein Katalysator für die ringöffnende Polymerisation kann ein Alkohol und/oder ein Diol sein.

Vorzugsweise weist Komponente A eine Glasübergangstemperatur (Tg) niedriger als -40°C, weiter bevorzugt niedriger als -50°C, besonders bevorzugt niedriger als -55°C auf. Nach einer weiteren vorteilhaften Ausführungsform der Erfindung ist Komponente A ein Polyester. Wenn Komponente A ein Polyester ist, kann dieser vorzugsweise durch ringöffnende Polymerisation eines zyklischen Esters, d.h. eines Lactons, erhalten werden.

Nach einer besonders vorteilhaften Ausführungsform der Erfindung wird als Komponente A Polycaprolacton eingesetzt. Wenn hier oder an anderer Stelle von Polycaprolacton die Rede ist, ist damit insbesondere Poly-ε-Caprolacton gemeint. Poly-ε-Caprolacton ist durch ringöffnende Polymerisation von ε-Caprolacton erhältlich.

Gemäß einer bevorzugten Ausführungsform der Erfindung weist Komponente A ein zahlenmittleres Molekulargewicht MW von 60.000 bis 120.000 g/mol, vorzugsweise von 70.000 g/mol bis 90.000 g/mol auf.

Neben Komponente A enthält die Folie mindestens eine weitere Komponente B. Erfindungsgemäß wird Komponente B ausgewählt aus der Gruppe bestehend aus thermoplastischen aliphatischen Copolyestern und Mischungen davon.

Gemäß einer bevorzugten Ausführungsform der Erfindung beträgt die Anzahl an Kohlenstoffatomen n pro Monomereinheit des thermoplastischen aliphatischen Copolyesters der Komponente B 4 bis 10. Besonders bevorzugt sind thermoplastische aliphatische Copolyester mit einer Anzahl n von Kohlenstoffatomen pro Monomereinheit von 4 bis 8, noch bevorzugter von 4 bis 6.

Gemäß einer weiteren bevorzugten Ausführungsform der Erfindung ist Komponente B ausgewählt aus der Gruppe an Polyestern bestehend aus Poly(3-hydroxybutyrat-co-3-hydroxyvalerat) (PHBV), Poly(3-hydroxybutyrat-co-3-hexanoat) (PHBH), Polybutylensuccinat (PBS), Poly(butylenadipat-co-succinat) (PBSA) und Mischungen davon. Besonders bevorzugt wird als Komponente B Poly(3-hydroxybutyrat-co-3-hexanoat) und/oder Poly(butylenadipat-co-succinat) eingesetzt.

In einer weiteren bevorzugten Ausführungsform der Erfindung besteht Komponente B aus einem thermoplastischen, aliphatischen Polyester.

In einer anderen bevorzugten Ausführungsform der Erfindung besteht Komponente B aus mehreren unterschiedlichen thermoplastischen aliphatischen Polyestern, insbesondere aus zwei oder drei unterschiedlichen thermoplastischen aliphatischen Polyestern.

Besonders gute Ergebnisse stellen sich ein, wenn das als Komponente B eingesetzte Poly(3-hydroxybutyrat-co-3-hexanoat) einen Molanteil an 3-Hydroxyhexanoat von 5 bis 15 Mol%, vorzugsweise 7 bis 13 Mol% oder 10 bis 13 Mol%, jeweils bezogen auf die Gesamtmenge PHBH, aufweist.

Vorteilhafterweise weist der thermoplastische aliphatische Copolyester gemäß Komponente B ein zahlenmittleres Molekulargewicht MW von 70.000 bis 1.500.000 g/mol, vorzugsweise von 90.000 bis 1.000.000 g/mol, vorzugsweise von 100.000 bis 800.000 g/mol, weiter bevorzugt von 100.000 bis 700.000 g/mol, noch bevorzugter von 100.000 bis 600.000 g/mol auf.

In einer bevorzugten Ausführungsform der Erfindung, in der Poly(3-hydroxybutyrat-co-hexanoat) Teilbestandteil oder einziger Bestandteil der Komponente B der erfindungsgemäßen Folie ist, weist das Poly(3-hydroxybutyrat-co-hexanoat) vorzugsweise ein zahlenmittleres Molekulargewicht von 100.000 bis 1.500.000 g/mol, vorzugsweise von 200.000 bis 1.000.000 g/mol, weiter bevorzugt von 300.000 bis 800.000 g/mol, besonders bevorzugt von 400.000 bis 700.000 g/mol, ganz besonders bevorzugt von 500.000 bis 600.000 g/mol auf.

In einer bevorzugten Ausführungsform der Erfindung, in der Poly(butylenadipat-co-succinat) Teilbestandteil oder einziger Bestandteil der Komponente B der erfindungsgemäßen Folie ist, weist das Poly(butylenadipat-co-succinat) vorzugsweise ein zahlenmittleres Molekulargewicht von 50.000 bis 500.000 g/mol, weiter bevorzugt von 70.000 bis 400.000 g/mol, besonders bevorzugt von 90.000 bis 300.000 g/mol, ganz besonders bevorzugt von 100.000 bis 200.000 g/mol auf.

Die erfindungsgemäße Folie kann neben den Komponenten A und B noch weitere polymere Komponenten enthalten. Insbesondere kann die erfindungsgemäße Folie neben den Komponenten A und B Poly(butylenadipat-co-terephthalat) (PBAT) oder Poly(butylensebacat-co-terephthalat) (PBST) oder Mischungen daraus enthalten.

Gemäß einer Ausführungsform weist die Folie 0,1 bis 30 Gew.-%, vorzugsweise 1 bis 25 Gew.-%, vorzugsweise 3 bis 20 Gew.-%, weiter bevorzugt 4 bis 15 Gew.-%, besonders bevorzugt 5 bis 12 Gew.-% Poly(butylenadipat-co-terephthalat) und/oder Poly(butylensebacat-co-terephthalat) (PBST) auf. Gemäß einer weiteren Ausführungsform weist die Folie 15 bis 25 Gew.-%, vorzugsweise 17 bis 23 Gew.-%, besonders bevorzugt 18 bis 22 Gew.-% Poly(butylenadipat-co-terephthalat) und/oder Poly(butylensebacat-co-terephthalat) (PBST) auf.

Als weiteren Bestandteil kann die erfindungsgemäße Folie 0,1 bis 20 Gew.-%, vorzugsweise 2 bis 18 Gew.-%, weiter bevorzugt 5 bis 15 Gew.-%, besonders bevorzugt 8-12 Gew.-% Stärke enthalten.

Erfindungsgemäß kann als Stärke unter anderem thermoplastische Stärke, denaturierte Stärke und/oder Stärkederivate eingesetzt werden. Bevorzugt kann thermoplastische Stärke eingesetzt werden.

Für viele Anwendungszwecke ist es vorteilhaft, wenn die Folie eine Gesamtdicke von 5 bis 200 um, vorzugsweise von 10 bis 80 um, besonders bevorzugt von 15 bis 60 um aufweist. Die Folie eignet sich in unterschiedlichen Dicken für die Herstellung unterschiedlicher Produkte. Folien in den genannten Dicken eignen sich insbesondere zur Herstellung von Tragetaschen und Transportbeuteln für den Alltagsgebrauch.

Die mechanischen Eigenschaften und die biologische Abbaubarkeit der erfindungsgemäßen Folie werden maßgeblich durch das Mengenverhältnis der Komponenten A und B bestimmt.

Die erfindungsgemäße Folie enthält 10 bis 50 Gew.-% einer Komponente A bezogen auf die Summe der Komponenten A und B. Gemäß einer bevorzugten Ausführungsform der Erfindung enthält die Folie 20 bis 40 Gew.-%, vorzugsweise 25 bis 40 Gew.-%, noch bevorzugt 25 bis 35 Gew.-% und besonders bevorzugt 28 bis 32 Gew.-% der Komponente A bezogen auf die Summe der Komponenten A und B.

Die erfindungsgemäße Folie enthält 50 bis 90 Gew.-% einer Komponente B bezogen auf die Summe der Komponenten A und B. In einer bevorzugten Ausführungsform der Erfindung enthält die Folie 60 bis 80 Gew.-%, vorzugsweise 60 bis 75 Gew.-%, noch bevorzugt 65 bis 75 Gew.-% und besonders bevorzugt 68 bis 72 Gew.-% der Komponente B, bezogen auf die Summe der Komponenten A und B.

Wenn hier oder an anderer Stelle von einer Komponente B die Rede ist, kann diese Komponente B aus einer Verbindung und/oder mehreren Verbindungen bestehen. In einer bevorzugten Ausführungsform der Erfindung besteht die Komponente B aus einer einzigen Verbindung. In einer weiteren bevorzugten Ausführungsform der Erfindung besteht die Komponenten B aus mehreren unterschiedlichen Verbindungen, insbesondere aus zwei oder drei unterschiedlichen Verbindungen.

Die erfindungsgemäße Folie zeichnet sich durch ausgezeichnete mechanische Eigenschaften aus, die ihren Einsatz in Transportbeuteln ermöglicht.

So weist die erfindungsgemäße Folie im trockenen Zustand vorzugsweise eine Reißdehnung in Extrusionsrichtung (MD, machine direction, Maschinenlaufrichtung), gemäß EN ISO 527, von mindestens 100% auf. In einer bevorzugten Ausführungsform der Erfindung beträgt die Reißdehnung in Extrusionsrichtung (MD), gemäß EN ISO 527, mindestens 150%, vorzugsweise mindestens 200%, bevorzugt mindestens 300%, besonders bevorzugt mindestens 400%.

Weiterhin weist die erfindungsgemäße Folie im trockenen Zustand vorzugsweise eine Reißdehnung entgegen der Extrusionsrichtung (TD, transverse direction, Querrichtung), gemäß EN ISO 527, von mindestens 100% auf. In einer bevorzugten Ausführungsform der Erfindung beträgt die Reißdehnung entgegen der Extrusionsrichtung (TD), gemäß EN ISO 527, mindestens 150%, vorzugsweise mindestens 200%, bevorzugt mindestens 300%, besonders bevorzugt mindestens 400%.

Zusätzlich weist die erfindungsgemäße Folie im trockenen Zustand vorzugsweise eine Zugfestigkeit in Extrusionsrichtung (MD) von mindestens 15 MPa, gemäß EN ISO 527, auf. Gemäß einer bevorzugten Ausführungsform der Erfindung beträgt die Zugfestigkeit in Exusionsrichtung (MD) der Folie im trockenen Zustand mindestens 20 MPa, vorzugsweise mindestens 25 MPa, besonders bevorzugt mindestens 30 MPa.

Außerdem weist die erfindungsgemäße Folie im trockenen Zustand vorzugsweise eine Zugfestigkeit entgegen der Extrusionsrichtung (TD) von mindestens 15 MPa, gemäß EN ISO 527, auf. Gemäß einer bevorzugten Ausführungsform der Erfindung beträgt die Zugfestigkeit entgegen der Exusionsrichtung (TD) der Folie im trockenen Zustand mindestens 20 MPa, vorzugsweise mindestens 25 MPa, besonders bevorzugt mindestens 30 MPa.

Vorteilhafterweise weist die Folie einen Dart-Drop Wert in trockenem Zustand von mindestens 4 g/um, vorzugsweise von mindestens 5 g/um, besonders bevorzugt von mindestens 6 g/um, gemäß der Methode ASTM D1709, auf.

Die erfindungsgemäße Folie zeichnet sich neben den hervorragenden mechanischen Eigenschaften auch durch eine sehr gute biologische Abbaubarkeit und schnelle Zersetzung in Salzwasser aus.

So weist die erfindungsgemäße Folie vorzugsweise nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts auf.

In einer bevorzugten Ausführungsform der Erfindung weist die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 20 Gew.-%, vorzugsweise maximal 10 Gew.-% des ursprünglichen Trockengewichts auf.

Der Begriff Salzwasser bezieht sich hier auf ein natürliches Meerwassermedium nach Punkt 7.5.2 der Methode ASTM D6691-09.

Wenn hier oder an anderer Stelle die Methode ASTM D6691-09 erwähnt wird, ist damit die am 15. November 2009 erteilte Fassung mit dem Titel *"Standard Test Method for Determining Aerobic Biodegradation of Plastic Materials in the Marine Environment by a Defined Microbial Consortium or Natural Sea Water Inoculum"* gemeint.

Die erfindungsgemäße Folie besitzt eine hervorragende biologische Abbaubarkeit in Salzwasser. Mindestens 30% des organischen Kohlenstoffs der erfindungsgemäßen Folie sind vorzugsweise nach Einbringen der Folie in Salzwasser innerhalb von 180 Tagen bei einer Temperatur von 30 ± 2°C, gemäß der Methode ASTM D6691-09, in Kohlenstoffdioxid umgesetzt.

In einer bevorzugten Ausführungsform der Erfindung ist nach Einbringen der Folie in Salzwasser für 180 Tage bei einer Temperatur von 30 ± 2°C unter kontrollierten Testbedingungen, gemäß der Methode ASTM D6691-09, vorzugsweise mindestens 40%, besonders bevorzugt mindestens 50% des organischen Kohlenstoffs der Folie in Kohlenstoffdioxid umgesetzt. Der Begriff Salzwasser bezieht sich hier auf ein natürliches Meerwassermedium nach Punkt 7.5.2 der Methode ASTM D6691-09.

Der biologische Abbau der erfindungsgemäßen Folie findet nicht nur in den natürlichen Bedingungen von Meerwasser außergewöhnlich effektiv statt. In einer bevorzugten Ausführungsform der Erfindung ist der organische Kohlenstoff der Folie in aktiven Abbaubedingungen gemäß der Methode DIN EN ISO 14855-1:2012 innerhalb von 180 Tagen vorzugsweise zu mindestens 70%, weiter bevorzugt zu mindestens 80%, besonders bevorzugt zu mindestens 90% zu Kohlenstoffdioxid umgesetzt.

Der biologische Abbau der Folie im Meerwasser erfolgt in der Regel in zwei Schritten, welche entweder gleichzeitig oder zeitlich versetzt zueinander einsetzen. Zum einen zersetzt sich die erfindungsgemäße Folie im Meerwasser in kleinere Teile ("Fragmentierung"). Zum anderen werden die Plastikteile biologisch auf molekularer Ebene abgebaut, indem sie von Mikroorganismen zu Kohlenstoffdioxid und Wasser umgesetzt werden ("biologischer Abbau"). Häufig, aber nicht zwingend, setzt der "Fragmentierungs"-Schritt vor dem "biologischen Abbau"-Schritt ein.

Die erfindungsgemäße Folie kann als ein- oder mehrschichtige Folie ausgebildet sein. Vorzugsweise ist die erfindungsgemäße Folie als einschichtige Folie ausgebildet, da sich eine einschichtige Folie besonders einfach und kostengünstig herstellen und zu Transportbeuteln weiterverarbeiten lässt. Es ist jedoch auch möglich, dass die erfindungsgemäße Folie eine oder mehrere gleiche oder unterschiedliche weitere Schichten umfasst. Die einzelnen Schichten einer Mehrschichtfolie können sich beispielsweise in ihrer Zusammensetzung und ihrer Dicke voneinander unterscheiden.

Die erfindungsgemäße Folie kann neben den genannten Bestandteilen weitere Bestandteile enthalten.

Die erfindungsgemäße Folie kann weiterhin beispielsweise Weichmacher enthalten. Beispiele für Weichmacher sind Glycerin, Sorbitol, Arabinose, Lycose, Xylose, Glykose, Fructose, Mannose, Allose, Altrose, Galactose, Gulose, Iodose, Inosit, Sorbose, Talit und Monoethoxylat-, Monopropoxylat- und Monoacetat-Derivate hiervon sowie Ethylen, Ethylenglykol, Propylenglykol, Ethylendiglykol, Propylendiglykol, Ethylentriglykol, Propylentriglykol, Polyethylenglykol, Polypropylenglykol, 1,2-Propandiol, 1,3-Propandiol, 1,2-, 1,3-, 1,4-Butandiol, 1,5-Pentandiol, 1,6-,1,5-Hexandiol, 1,2,6-, 1,3,5-Hexantriol, Neopentylglykol, Trimethylopropan, Pentaerithritol, Sorbit und deren Acetat-, Ethoxylat- und Propoxylat-derivate und Mischungen daraus.

Vorzugsweise ist die erfindungsgemäße Folie frei von oligomeren Esterverbindungen mit einem gewichtsmittleren Molekulargewicht von 500 bis 5000 g/mol, insbesondere von Poly(1,3-butylenglycol-co-1,2-propylenglycoladipisäure) terminiert mit 2-Ethylhexanol, Poly(neopentylglycol-co-1,4-butylenglycoladipinsäure) terminiert mit 2-Ethylhexanol, Poly(1,3-butylenglycoladipinsäure) nicht-terminiert, Poly(1,2-propylenglycoladipinsäure-co-phthalsäure) terminiert mit 2-Ethylhexanol, Poly(neopentylglycoladipinsäure) terminiert mit 2-Ethylhexanol, Poly(1,2-Propylenglycoladipinsäure-co-phthalsäure) terminiert mit 2-Ethylhexanol, Poly(1,3-butylenglycoladipinsäure) terminiert mit gemischten Fettsäuren, Poly(1,2-propylenglycoladipinsäure) terminiert mit 2-Ethylhexanol, Poly(1,2-propylenglycol-co-1,4-butylenglycoladipinsäure) terminiert mit 2-Ethylhexanol, Poly(1,4-butylenglycoladipinsäure) oder Poly(1,4-butylenglycol-co-ethylenglycoladipinsäure), jeweils mit einem gewichtsmittleren Molekulargewicht von 500 bis 5000 g/mol.

Ferner kann die erfindungsemäße Folie Dispergierhilfen wie z.B. Detergentien, Schmelzstabilisatoren, Verarbeitungshilfsmittel, Stabilisatoren, Antioxidationsmittel, Antiflammmittel, Antiblockmittel, Füllstoffe und/oder Additive enthalten.

Darüber hinaus kann die erfindungsgemäße Folie zusätzlich weitere Polymere wie zum Beispiel Polyethylenglykol, Polyvinylalkohol, Chitin, Chitosan, Cellulose, Cellulosederivate, Polyester, Polydimethylaminoethylmethacrylat und Mischungen davon enthalten.

Gemäß einer weiteren bevorzugten Ausführungsform der Erfindung enthält die erfindungsgemäße Folie ein oder mehrere Füllstoffe und/oder ein oder mehrere Zerfallsmittel. Abhängig von Art und Menge an Füllstoff und/oder Zerfallsmittel kann die Zerfallsgeschwindigkeit der erfindungsgemäßen Folie beeinflusst werden.

Bevorzugte Füllstoffe für diesen Zweck sind ausgewählt aus der Gruppe bestehend aus Calciumcarbonat, Talkum, Kaolin, Dolomit, Glimmer, Kieselsäure und Mischungen davon.

Zerfallsmittel sind dem Fachmann bekannt. Bevorzugte Zerfallsmittel für diesen Zweck sind ausgewählt aus der Gruppe bestehend aus Natriumhydrogencarbonat, Alginsäure, Calciumalginat, Natriumalginat, mikrokristalline Cellulose, Natriumcarboxymethylcellulose, Stärke, Natriumcarboxymethylstärke, Polyvinylpyrrolidon und Mischungen davon. Stärke kann nativ oder destrukturiert vorliegen.

Die Erfindung betrifft ferner die Verwendung eines Polymerblends, enthaltend Komponente A und Komponente B, zur Herstellung einer Folie mit einer Gesamtdicke von 1 bis 200 um und mindestens einer der folgenden mechanischen Eigenschaften:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527;
und wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2 °C, gemäß der Methode ASTM D6691-09, in Kohlenstoffdioxid umgesetzt sind.

Für die Komponenten A und B der erfindungsgemäßen Verwendung gilt das zu den Komponenten A und B der erfindungsgemäßen Folie Gesagte jeweils entsprechend. Ferner kann der Polymerblend einen oder mehrere der vorgenannten Bestandteile enthalten.

Vorzugsweise enthält der Polymerblend 10 bis 50 Gew.-%, insbesondere 20 bis 40 Gew.-%, 25 bis 40 Gew.-%, 25 bis 35 Gew.-% oder 28 bis 32 Gew.-% der Komponente A, bezogen auf die Summe der Komponenten A und B. Ferner enthält der Polymerblend vorzugsweise 50 bis 90 Gew.-%, insbesondere 60 bis 80 Gew.-%, 60 bis 75 Gew.-%, 65 bis 75 Gew.-% oder 68 bis 72 Gew.-% der Komponente B, bezogen auf die Summe der Komponenten A und B.

Gegenstand der Erfindung sind außerdem auch Erzeugnisse, die mit der erfindungsgemäßen Folie hergestellt oder herstellbar sind.

Von besonderer Bedeutung sind Transportbeutel, die aus der erfindungsgemäßen Folie hergestellt oder herstellbar sind. Die erfindungsgemäßen Folien eignen sich zur Herstellung von Transportbeuteln jeglicher Art, einschließlich Tragetaschen, Obstbeutel, Gemüsebeutel, Light T-Shirt Bags und Ultra-Light T-Shirt Bags.

Die unterschiedlichen Arten von Transportbeuteln können je nach Anwendungszweck ein unterschiedliches Gewicht aufweisen. In einer bevorzugten Ausführungsform der Erfindung weist beispielsweise ein erfindungsgemäßer Transportbeutel ein Gewicht von vorzugsweise 1 bis 90 g, weiter bevorzugt 2 bis 50 g oder besonders bevorzugt 20 bis 40 g. Für andere Anwendungen eignen sich besonders erfindungsgemäße Transportbeutel, die ein Gewicht von vorzugsweise 1 bis 10 g, besonders bevorzugt 1,5 bis 5 g aufweisen.

Die Erfindung betrifft schließlich auch ein Verfahren zur Herstellung einer Folie. Das erfindungsgemäße Verfahren zur Herstellung einer Folie umfasst mindestens folgende Schritte:
a.Bereitstellen eines Polymerblends enthaltend Komponente A und Komponente B;
b.Ausbilden einer Folie aus dem Polymerblend gemäß Schritt a.

Geeignete Verfahren zur Ausbildung einer Folie gemäß Schritt b. sind dem Fachmann allgemein bekannt und umfassen typischerweise einen Extrusionsschritt (insbesondere einen Coextrusionsschritt) und/oder einen Kaschierungsschritt.

Für die Komponenten A und B des erfindungsgemäßen Verfahrens gilt das zu den Komponenten A und B der erfindungsgemäßen Folie Gesagte jeweils entsprechend. Ferner kann der Polymerblend einen oder mehrere der vorgenannten Bestandteile enthalten.

Vorzugsweise enthält der Polymerblend 10 bis 50 Gew.-%, insbesondere 20 bis 40 Gew.-%, 25 bis 40 Gew.-%, 25 bis 35 Gew.-% oder 28 bis 32 Gew.-% der Komponente A, bezogen auf die Summe der Komponenten A und B. Ferner enthält der Polymerblend vorzugsweise 50 bis 90 Gew.-%, insbesondere 60 bis 80 Gew.-%, 60 bis 75 Gew.-%, 65 bis 75 Gew.-% oder 68 bis 72 Gew.-% der Komponente B, bezogen auf die Summe der Komponenten A und B.

Die Erfindung wird im Folgenden anhand von Ausführungsbeispielen näher erläutert.

### Beispiele

Für die Vergleichs- und Ausführungsbeispiele wurden folgende Materialien verwendet: Poly(butylensuccinat-co-adipat), PBSA (BioPBS FD92PM, PTT MCC Biochem Company Limited); Polycaprolacton, PCL (Capa 6800, Perstorp); Poly(hydroxybutyrat-co-hexanoat), PHBH (AONILEX 151N; KANEKA); Erucasäureamid (LOXIOL E SPEZ P, Emery Oleochemicals).

### Beispiel 1:

Mit einem Doppelschneckenextruder des Typs Coperion ZSK 40 (zweiwelliger Schneckenkneter), Schneckendurchmesser 40 mm, L/D = 42, wurde ein Polymerblend mit der in Tab. 1 angegebenen Rezeptur A hergestellt und zu Granulat verarbeitet (dosierte Anteile in Massenprozent):

**Tab. 1: Rezeptur A**

| Verbindung | Menge |
|---|---|
| PCL | 29,7 |
| PBSA | 69,3 |
| Loxiol | 1 |

Dabei wurden folgende Compoundierparameter eingehalten:

**Tab. 2: Temperaturprofil (Doppelschneckenextruder ZSK 40)**

| Zone 1 | Zone 2 | Zone 3 | Zone 4 | Zone 5 | Zone 6 | Zone 7 | Zone 8 | Zone 9 | Zone 10 | Düse |
|---|---|---|---|---|---|---|---|---|---|---|
| 25 °C | 100 °C | 110 °C | 115 °C | 130 °C | 145 °C | 160 °C | 160 °C | 160 °C | 160 °C | 160 °C |

| | |
|---|---|
| Drehzahl | 100 min⁻¹ |
| Durchsatz | 50 kg/h |
| Entgasung | - 0,96 bar, Zone 8 |
| Wassergehalt | 0,07 % |

Aus dem hergestellten Granulat wurden Blasfolien hergestellt. Hierfür wurde das Granulat A mit einem Einwellenextruder des Typs KABRA, Schneckendurchmesser 65 mm, L/D = 23, aufgeschmolzen und zu einer Blasfolie verarbeitet.

Für die Untersuchung der Haltbarkeit der Folie in Wasser wurden Proben der Folie in Diarahmen eingespannt und in natürliches Meerwasser eingelegt. Die Zersetzung der Folie wurde visuell begutachtet. In Tab. 3 ist die relative Zersetzung der Folie innerhalb eines Zeitraums von 72 Tagen in Meerwasser dokumentiert.

**Tab. 3: Relative Zersetzung der Folie erhältlich aus Granulat A**

| Tage | Zersetzung |
|---|---|
| 0 | 1 |
| 22 | (3) -4 |
| 37 | 4 |
| 72 | 4 |

### Legende:

| Wert | Bedeutung |
|---|---|
| 1 | Folie intakt |
| 2 | Zersetzung sichtbar |
| 3 | Zersetzung fortgeschritten |
| 4 | Folie komplett zersetzt |

Zusätzlich wurden die mechanischen Eigenschaften der Folie überprüft. Die Messungen der Zugfestigkeit und Reißdehnung erfolgten auf einer Tinius Olsen Universalprüfmaschine H10KS. Zur Bestimmung der Foliendicke wurde das Präzisionsdickenmessgerät DM 2000 von Wolf-Messtechnik verwendet. Die Ergebnisse der Messungen sind in Tab. 4 aufgeführt.

**Tab. 4: Mechanische Eigenschaften der Folie**

| Dicke der Folie [µm] | Zugfestigke it (MD) [MPa] | Zugfestigke it (TD) [MPa] | Reißdehnung (MD) [%] | Reißdehnung (TD) [%] |
|---|---|---|---|---|
| 12-27 | 34 | 30, 1 | 677 | 878 |

Wie den Tab. 3 und 4 zu entnehmen ist, weist die Folie hervorragende mechanische Eigenschaften zur Verwendung als Transportbeutel sowie eine außergewöhnlich schnelle Zersetzung in Meerwasser auf. Bereits nach etwa einem Monat in Meerwasser hat sich die Folie fast vollständig zersetzt (Tab. 3, Z. 2).

### Beispiel 2:

Mit einem Doppelschneckenextruder des Typs Coperion ZSK 40 (zweiwelliger Schneckenkneter), Schneckendurchmesser 40 mm, L/D = 42, wurde ein Polymerblend mit der in Tab. 5 angegebenen Rezeptur B hergestellt und zu Granulat verarbeitet (dosierte Anteile in Massenprozent):

**Tab. 5: Rezeptur B**

| Verbindung | Menge |
|---|---|
| PCL | 29,7 |
| PHBH | 69,3 |
| Loxiol | 1 |

Dabei wurden folgende Compoundierparameter eingehalten:

**Tab. 6: Temperaturprofil (Doppelschneckenextruder ZSK 40)**

| Zone 1 | Zone 2 | Zone 3 | Zone 4 | Zone 5 | Zone 6 | Zone 7 | Zone 8 | Zone 9 | Zone 10 | Düse |
|---|---|---|---|---|---|---|---|---|---|---|
| 25 °C | 100 °C | 110 °C | 115 °C | 130 °C | 145 °C | 160 °C | 160 °C | 160 °C | 160 °C | 160 °C |

| | |
|---|---|
| Drehzahl | 100 min⁻¹ |
| Durchsatz | 50 kg/h |
| Entgasung | - 0,98 bar, Zone 8 |
| Wassergehalt | 0,13 % |

Aus dem hergestellten Granulat wurden Blasfolien hergestellt. Hierfür wurde das Granulat B mit einem Einwellenextruder des Typs KABRA, Schneckendurchmesser 65 mm, L/D = 23, aufgeschmolzen und zu einer Blasfolie verarbeitet.

Die mechanischen Eigenschaften der Folie wurden überprüft. Die Messung wurden mit den gleichen Apparaten wie in Beispiel 1 durchgeführt. Die Ergebnisse der Messung sind in Tab. 7 aufgeführt.

**Tab. 7: Mechanische Eigenschaften der Folie**

| Dicke der Folie [µm] | Zugfestigke it (MD) [MPa] | Zugfestigke it (TD) [MPa] | Reißdehnung (MD) [%] | Reißdehnung (TD) [%] |
|---|---|---|---|---|
| 41-60 | 32,6 | 28,9 | 714 | 669 |

Wie der Tab. 7 zu entnehmen ist, weist die Folie hervorragende mechanische Eigenschaften zur Verwendung als Transportbeutel auf.

### Beispiel 3:

Mit einem Doppelschneckenextruder des Typs Coperion ZSK 40 (zweiwelliger Schneckenkneter), Schneckendurchmesser 40 mm, L/D = 42, wurde ein Polymerblend mit der in Tab. 8 angegebenen Rezeptur C hergestellt und zu Granulat verarbeitet (dosierte Anteile in Massenprozent):

**Tab. 8: Rezeptur C**

| Verbindung | Menge |
|---|---|
| PCL | 19,8 |
| PHBH | 19,8 |
| PBSA | 59,4 |
| Loxiol | 1 |

Dabei wurden folgende Compoundierparameter eingehalten:

**Tab. 9: Temperaturprofil (Doppelschneckenextruder ZSK 40)**

| Zone 1 | Zone 2 | Zone 3 | Zone 4 | Zone 5 | Zone 6 | Zone 7 | Zone 8 | Zone 9 | Zone 10 | Düse |
|---|---|---|---|---|---|---|---|---|---|---|
| 25 °C | 100 °C | 110 °C | 115 °C | 130 °C | 145 °C | 160 °C | 160 °C | 160 °C | 160 °C | 160 °C |

| | |
|---|---|
| Drehzahl | 100 min⁻¹ |
| Durchsatz | 50 kg/h |
| Entgasung | - 0,98 bar, Zone 8 |
| Wassergehalt | 0,07 % |

Aus dem hergestellten Granulat wurden Blasfolien hergestellt. Hierfür wurde das Granulat C mit einem Einwellenextruder des Typs *Collin 30* (*DR. COLLIN*)*,* Schneckendurchmesser 30 mm, L/D = 33, aufgeschmolzen und zu einer Blasfolie verarbeitet. Die mechanischen Eigenschaften der Folie wurden überprüft. Die Messung wurden mit den gleichen Apparaten wie in Beispiel 1 durchgeführt. Die Ergebnisse der Messung sind in Tab. 10 aufgeführt.

**Tab. 10: Mechanische Eigenschaften der Folie**

| Dicke der Folie [µm] | Zugfestigke it (MD) [MPa] | Zugfestigke it (TD) [MPa] | Reißdehnung (MD) [%] | Reißdehnung (TD) [%] |
|---|---|---|---|---|
| 23-35 | 41,2 | 39, 5 | 690 | 866 |

Wie der Tab. 10 zu entnehmen ist, weist die Folie hervorragende mechanische Eigenschaften zur Verwendung als Transportbeutel auf.

Gegenstand der Erfindung sind ferner die in den nachstehenden Sätzen beschriebenen Ausführungsformen der Erfindung:
1. Folie enthaltend 10 bis 50 Gew.-% einer Komponente A und 50 bis 90 Gew.-% einer Komponente B, bezogen auf die Summe der Komponenten A und B,
   wobei Komponente A ausgewählt ist aus der Gruppe bestehend aus Polymeren, die aus ringöffnender Polymerisation erhältlich sind und eine Glasübergangstemperatur (Tg) niedriger als -30 °C haben und
   Komponente B ausgewählt ist aus der Gruppe bestehend aus thermoplastischen aliphatischen Copolyestern und Mischungen davon,
   wobei die Folie eine Gesamtdicke von 1 bis 200 um aufweist.
2. Folie gemäß Satz 1, **dadurch gekennzeichnet, dass** die Folie mindestens eine der folgenden mechanischen Eigenschaften aufweist:
   - Zugfestigkeit in trockenem Zustand in Extrusionsrichtung (MD) von mindestens 15 MPa gemäß EN ISO 527;
   - Zugfestigkeit in trockenem Zustand quer zur Extrusionsrichtung (TD) von mindestens 15 MPa gemäß EN ISO 527;
   - Reißdehnung in trockenem Zustand in Extrusionsrichtung (MD) von mindestens 100% gemäß EN ISO 527;
   - Reißdehnung in trockenem Zustand quer zur Extrusionsrichtung (TD) von mindestens 100% gemäß EN ISO 527.
3. Folie gemäß Satz 1 oder 2, **dadurch gekennzeichnet, dass** die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2°C, gemäß der Methode ASTM D6691-09, in Kohlenstoffdioxid umgesetzt sind.
4. Folie gemäß einem der vorstehenden Sätze, **dadurch gekennzeichnet, dass** Komponente A eine Glasübergangstemperatur (Tg) niedriger als -40°C, insbesondere niedriger als -50°C oder niedriger als -55°C aufweist.
5. Folie gemäß einem der vorstehenden Sätze, **dadurch gekennzeichnet, dass** Komponente A ein Polyester ist.
6. Folie gemäß einem der vorstehenden Sätze, **dadurch gekennzeichnet, dass** Komponente A Polycaprolacton ist.
7. Folie gemäß einem der vorstehenden Sätze, **dadurch gekennzeichnet, dass** Komponente A ein zahlenmittleres Molekulargewicht von 60.000 bis 120.000 g/mol, insbesondere von 70.000 bis 90.000 g/mol, aufweist.
8. Folie gemäß einem der vorstehenden Sätze, **dadurch gekennzeichnet, dass** Komponente B ausgewählt ist aus der Gruppe bestehend aus thermoplastischen aliphatischen Copolyestern mit n Kohlenstoffatomen pro Monomereinheit, wobei n 4 bis 10, 4 bis 8 oder 4 bis 6, beträgt.
9. Folie gemäß einem der vorstehenden Sätze, **dadurch gekennzeichnet, dass** Komponente B ausgewählt ist aus der Gruppe bestehend aus Poly(3-hydroxybutyrat-co-3-hydroxyvalerat), Poly(3-hydroxybutyrat-co-3-hexanoat), Polybutylensuccinat, Poly(butylenadipat-co-succinat) und Mischungen davon.
10. Folie gemäß einem der vorstehenden Sätze, **dadurch gekennzeichnet, dass** Komponente B Poly(3-hydroxybutyrat-co-3-hexanoat) und/oder Poly(butylenadipat-co-succinat) ist.
11. Folie gemäß einem der vorstehenden Sätze, **dadurch gekennzeichnet, dass** der thermoplastische aliphatische Copolyester gemäß Komponente B ein zahlenmittleres Molekulargewicht von 70.000 bis 1.500.000 g/mol, 90.000 bis 1.000.000 g/mol, 100.000 bis 800.000 g/mol, 100.000 bis 700.000 g/mol oder 100.000 bis 600.000 g/mol, aufweist.
12. Folie gemäß Satz 9 oder 10, **dadurch gekennzeichnet, dass** Poly(3-hydroxybutyrat-co-3-hexanoat) ein zahlenmittleres Molekulargewicht von 100.000 bis 1.500.000 g/mol, 200.000 bis 1.000.000 g/mol, 300.000 bis 800.000 g/mol, 400.000 bis 700.000 g/mol oder 500.000 bis 600.000 g/mol, aufweist.
13. Folie gemäß Satz 9 oder 10, **dadurch gekennzeichnet, dass** Poly(butylenadipat-co-succinat) ein zahlenmittleres Molekulargewicht von 50.000 bis 500.000 g/mol, 70.000 bis 400.000 g/mol, 90.000 bis 300.000 g/mol oder 100.000 bis 200.000 g/mol, aufweist.
14. Folie gemäß einem der vorstehenden Sätze, **dadurch gekennzeichnet, dass** die Folie 0,1 bis 30 Gew.-%, 1 bis 25 Gew.-%, 3 bis 20 Gew.-%, 4 bis 15 Gew.-%, 5 bis 12 Gew.-%, 15 bis 25 Gew.-%, 17 bis 23 Gew.-% oder 18 bis 22 Gew.-% Poly(butylenadipat-co-terephthalat), bezogen auf das Gesamtgewicht, umfasst.
15. Folie gemäß einem der vorstehenden Sätze, **dadurch gekennzeichnet, dass** die Folie 0,1 bis 30 Gew.-%, 1 bis 25 Gew.-%, 3 bis 20 Gew.-%, 4 bis 15 Gew.-%, 5 bis 12 Gew.-%, 15 bis 25 Gew.-%, 17 bis 23 Gew.-% oder 18 bis 22 Gew.-% Poly(butylensebacat-co-terephthalat), bezogen auf das Gesamtgewicht, umfasst.
16. Folie gemäß einem der vorstehenden Sätze, **dadurch gekennzeichnet, dass** die Folie 0,1 bis 20 Gew.-%, 2 bis 18 Gew.-%, 5 bis 15 Gew.-% oder 8 bis 12 Gew.-% Stärke, insbesondere thermoplastische Stärke, bezogen auf das Gesamtgewicht, umfasst.
17. Folie gemäß einem der vorstehenden Sätze, **dadurch gekennzeichnet, dass** die Folie eine Gesamtdicke von 5 bis 200 um, 10 bis 80 um oder 15 bis 60 um, aufweist.
18. Folie gemäß einem der vorstehenden Sätze, **dadurch gekennzeichnet,** dass die Folie 20 bis 40 Gew.-%, 25 bis 40 Gew.-%, 25 bis 35 Gew.-% oder 28 bis 32 Gew.-%, der Komponente A, bezogen auf die Summe von Komponenten A und B, umfasst.
19. Folie gemäß einem der vorstehenden Sätze, **dadurch gekennzeichnet, dass** die Folie 60 bis 80 Gew.-%, 60 bis 75 Gew.-%, 65 bis 75 Gew.-% oder 68 bis 72 Gew.-%, der Komponente B, bezogen auf die Summe von Komponenten A und B, umfasst.
20. Folie gemäß einem der vorstehenden Sätze, **dadurch gekennzeichnet, dass** die Folie eine Zugfestigkeit in trockenem Zustand in Extrusionsrichtung (MD) von mindestens 20 MPa, insbesondere von mindestens 25 MPa, gemäß EN ISO 527, aufweist.
21. Folie gemäß einem der vorstehenden Sätze, **dadurch gekennzeichnet, dass** die Folie eine Zugfestigkeit in trockenem Zustand quer zur Extrusionsrichtung (TD) von mindestens 20 MPa, insbesondere von mindestens 25 MPa, gemäß EN ISO 527, aufweist.
22. Folie gemäß einem der vorstehenden Sätze, **dadurch gekennzeichnet, dass** die Folie eine Reißdehnung in trockenem Zustand in Extrusionsrichtung (MD) von mindestens 200%, mindestens 300% oder mindestens 400%, gemäß EN ISO 527, aufweist.
23. Folie gemäß einem der vorstehenden Sätze, **dadurch gekennzeichnet, dass** die Folie eine Reißdehnung in trockenem Zustand quer zur Extrusionsrichtung (TD) von mindestens 200%, mindestens 300% oder mindestens 400%, gemäß EN ISO 527, aufweist.
24. Folie gemäß einem der vorstehenden Sätze, **dadurch gekennzeichnet, dass** der organische Kohlenstoff der Folie nach Einbringen in Salzwasser innerhalb von 180 Tagen bei 30 ± 2°C, gemäß der Methode ASTM D6691-09, zu mindestens 40%, insbesondere zu mindestens 50%, zu Kohlenstoffdioxid umgesetzt ist.
25. Folie gemäß einem der vorstehenden Sätze, **dadurch gekennzeichnet, dass** die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 20 Gew.-%, insbesondere maximal 10 Gew.-% des ursprünglichen Trockengewichts aufweist.
26. Folie gemäß einem der vorstehenden Sätze, **dadurch gekennzeichnet, dass** der organische Kohlenstoff der Folie in aktiven Abbaubedingungen gemäß der Methode DIN EN ISO 14855-1:2012 innerhalb von 180 Tagen zu mindestens 70%, zu mindestens 80% oder zu mindestens 90%, in Kohlenstoffdioxid umgesetzt wurde.
27. Verwendung eines Polymerblends enthaltend Komponente A und Komponente B zur Herstellung einer Folie mit einer Gesamtdicke von 1 bis 200 um und mindestens einer der folgenden mechanischen Eigenschaften:
   - Zugfestigkeit in trockenem Zustand in Extrusionsrichtung (MD) von mindestens 15 MPa gemäß EN ISO 527;
   - Zugfestigkeit in trockenem Zustand quer zur Extrusionsrichtung (TD) von mindestens 15 MPa gemäß EN ISO 527;
   - Reißdehnung in trockenem Zustand in Extrusionsrichtung (MD) von mindestens 100% gemäß EN ISO 527;
   - Reißdehnung in trockenem Zustand quer zur Extrusionsrichtung (TD) von mindestens 100% gemäß EN ISO 527;
      und wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2°C, gemäß der Methode ASTM D6691-09, in Kohlenstoffdioxid umgesetzt sind.
28. Verwendung nach Satz 27, **dadurch gekennzeichnet, dass** Komponente A wie in einem der Sätze 1 oder 4 bis 7 definiert ist und/oder dass Komponente B wie in einem der Sätze 1 oder 8 bis 13 definiert ist.
29. Verwendung nach einem der Sätze 27 oder 28, **dadurch gekennzeichnet, dass** der Polymerblend 10 bis 50 Gew.-%, insbesondere 20 bis 40 Gew.-%, 25 bis 40 Gew.-%, 25 bis 35 Gew.-% oder 28 bis 32 Gew.-% der Komponente A, bezogen auf die Summe der Komponenten A und B, und/oder 50 bis 90 Gew.-%, insbesondere 60 bis 80 Gew.-%, 60 bis 75 Gew.-%, 65 bis 75 Gew.-% oder 68 bis 72 Gew.-% der Komponente B enthält, bezogen auf die Summe der Komponenten A und B.
30. Transportbeutel enthaltend eine Folie gemäß einem der Sätze 1 bis 26.
31. Transportbeutel gemäß Satz 30, **dadurch gekennzeichnet, dass** der Transportbeutel ausgewählt ist aus der Gruppe bestehend aus Tragetasche, Obstbeutel, Gemüsebeutel, Light T-Shirt Bag und Ultra-Light T-Shirt Bag.
32. Transportbeutel gemäß Satz 30 oder 31, **dadurch gekennzeichnet, dass** der Transportbeutel ein Gewicht von 1 bis 90 g, 2 bis 50 g, 20 bis 40 g, 1 bis 10 g oder 1,5 bis 5 g aufweist.
33. Verfahren zur Herstellung einer Folie gemäß einem der Sätze 1 bis 26, gekennzeichnet durch folgende Schritte:
   a. Bereitstellen eines Polymerblends enthaltend Komponente A und Komponente B;
   b. Ausbilden einer Folie aus dem Polymerblend gemäß Schritt a.
34. Verfahren gemäß Satz 33, **dadurch gekennzeichnet, dass** das Verfahren einen Coextrusionsschritt umfasst.
35. Verfahren gemäß Satz 33 oder 34, **dadurch gekennzeichnet, dass** das Verfahren einen Kaschierungsschritt umfasst.
36. Verfahren gemäß einem der Sätze 33 bis 35, **dadurch gekennzeichnet, dass** Komponente A wie in einem der Sätze 1 oder 4 bis 7 definiert ist und/oder dass Komponente B wie in einem der Sätze 1 oder 8 bis 13 definiert ist.
37. Verfahren gemäß einem der Sätze 33 bis 36, **dadurch gekennzeichnet, dass** der Polymerblend 10 bis 50 Gew.-%, insbesondere 20 bis 40 Gew.-%, 25 bis 40 Gew.-%, 25 bis 35 Gew.-% oder 28 bis 32 Gew.-% der Komponente A, bezogen auf die Komponenten A und B, und/oder 50 bis 90 Gew.-%, inbesondere 60 bis 80 Gew.-%, 60 bis 75 Gew.-%, 65 bis 75 Gew.-% oder 68 bis 72 Gew.-% der Komponente B enthält, bezogen auf die Summe der Komponenten A und B.

## Patentansprüche

1. Folie enthaltend 10 bis 50 Gew.-% einer Komponente A und 50 bis 90 Gew.-% einer Komponente B, bezogen auf die Summe der Komponenten A und B,
wobei Komponente A ausgewählt ist aus der Gruppe bestehend aus Polymeren, die aus ringöffnender Polymerisation erhältlich sind und eine Glasübergangstemperatur (Tg) niedriger als -30 °C haben und
Komponente B ausgewählt ist aus der Gruppe bestehend aus thermoplastischen aliphatischen Copolyestern und Mischungen davon,
wobei die Folie als einschichtige Folie ausgebildet ist,
wobei die Folie eine Gesamtdicke von 1 bis 200 um sowie mindestens eine der folgenden mechanischen Eigenschaften aufweist:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527;
und
wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2°C, gemäß der Methode ASTM D6691-09, in Kohlenstoffdioxid umgesetzt sind.

2. Folie gemäß Anspruch 1, **dadurch gekennzeichnet, dass** Komponente A eine Glasübergangstemperatur (Tg) niedriger als -40°C, insbesondere niedriger als -50°C oder niedriger als -55°C aufweist, und/oder dass Komponente A ein Polyester ist, und/oder dass Komponente A Polycaprolacton ist, und/oder dass Komponente A ein zahlenmittleres Molekulargewicht von 60.000 bis 120.000 g/mol, insbesondere von 70.000 bis 90.000 g/mol, aufweist, und/oder
dass Komponente B ausgewählt ist aus der Gruppe bestehend aus thermoplastischen aliphatischen Copolyestern mit n Kohlenstoffatomen pro Monomereinheit, wobei n 4 bis 10, 4 bis 8 oder 4 bis 6, beträgt.

3. Folie gemäß einem der vorstehenden Ansprüche, **dadurch gekennzeichnet, dass** Komponente B ausgewählt ist aus der Gruppe bestehend aus Poly(3-hydroxybutyrat-co-3-hydroxyvalerat), Poly(3-hydroxybutyrat-co-3-hexanoat), Polybutylensuccinat, Poly(butylenadipat-co-succinat) und Mischungen davon, und/oder
dass Komponente B Poly(3-hydroxybutyrat-co-3-hexanoat) und/oder Poly(butylenadipat-co-succinat) ist.

4. Folie gemäß einem der vorstehenden Ansprüche, **dadurch gekennzeichnet, dass** der thermoplastische aliphatische Copolyester gemäß Komponente B ein zahlenmittleres Molekulargewicht von 70.000 bis 1.500.000 g/mol, 90.000 bis 1.000.000 g/mol, 100.000 bis 800.000 g/mol, 100.000 bis 700.000 g/mol oder 100.000 bis 600.000 g/mol, aufweist.

5. Folie gemäß Anspruch 3, **dadurch gekennzeichnet, dass** Poly(3-hydroxybutyrat-co-3-hexanoat) ein zahlenmittleres Molekulargewicht von 100.000 bis 1.500.000 g/mol, 200.000 bis 1.000.000 g/mol, 300.000 bis 800.000 g/mol, 400.000 bis 700.000 g/mol oder 500.000 bis 600.000 g/mol, aufweist.

6. Folie gemäß Anspruch 3, **dadurch gekennzeichnet, dass** Poly(butylenadipat-co-succinat) ein zahlenmittleres Molekulargewicht von 50.000 bis 500.000 g/mol, 70.000 bis 400.000 g/mol, 90.000 bis 300.000 g/mol oder 100.000 bis 200.000 g/mol, aufweist.

7. Folie gemäß einem der vorstehenden Ansprüche, **dadurch gekennzeichnet, dass** die Folie 0,1 bis 30 Gew.-%, 1 bis 25 Gew.-%, 3 bis 20 Gew.-%, 4 bis 15 Gew.-%, 5 bis 12 Gew.-%, 15 bis 25 Gew.-%, 17 bis 23 Gew.-% oder 18 bis 22 Gew.-% Poly(butylenadipat-co-terephthalat), bezogen auf das Gesamtgewicht, umfasst, und/oder dass die Folie 0,1 bis 30 Gew.-%, 1 bis 25 Gew.-%, 3 bis 20 Gew.-%, 4 bis 15 Gew.-%, 5 bis 12 Gew.-%, 15 bis 25 Gew.-%, 17 bis 23 Gew.-% oder 18 bis 22 Gew.-% Poly(butylensebacat-co-terephthalat), bezogen auf das Gesamtgewicht, umfasst, und/oder
dass die Folie 0,1 bis 20 Gew.-%, 2 bis 18 Gew.-%, 5 bis 15 Gew.-% oder 8 bis 12 Gew.-% Stärke, insbesondere thermoplastische Stärke, bezogen auf das Gesamtgewicht, umfasst, und/oderdass die Folie eine Gesamtdicke von 5 bis 200 um, 10 bis 80 um oder 15 bis 60 um, aufweist, und/oder
dass die Folie 20 bis 40 Gew.-%, 25 bis 40 Gew.-%, 25 bis 35 Gew.-% oder 28 bis 32 Gew.-%, der Komponente A, bezogen auf die Summe von Komponenten A und B, umfasst, und/oder
dass die Folie 60 bis 80 Gew.-%, 60 bis 75 Gew.-%, 65 bis 75 Gew.-% oder 68 bis 72 Gew.-%, der Komponente B, bezogen auf die Summe von Komponenten A und B, umfasst.

8. Folie gemäß einem der vorstehenden Ansprüche, **dadurch gekennzeichnet, dass** die Folie eine Zugfestigkeit in trockenem Zustand in Extrusionsrichtung (MD) von mindestens 20 MPa, insbesondere von mindestens 25 MPa, gemäß EN ISO 527, aufweist, und/oder
dass die Folie eine Zugfestigkeit in trockenem Zustand quer zur Extrusionsrichtung (TD) von mindestens 20 MPa, insbesondere von mindestens 25 MPa, gemäß EN ISO 527, aufweist, und/oder
dass die Folie eine Reißdehnung in trockenem Zustand in Extrusionsrichtung (MD) von mindestens 200%, mindestens 300% oder mindestens 400%, gemäß EN ISO 527, aufweist, und/oder
dass die Folie eine Reißdehnung in trockenem Zustand quer zur Extrusionsrichtung (TD) von mindestens 200%, mindestens 300% oder mindestens 400%, gemäß EN ISO 527, aufweist, und/oder
dass der organische Kohlenstoff der Folie nach Einbringen in Salzwasser innerhalb von 180 Tagen bei 30 ± 2°C, gemäß der Methode ASTM D6691-09, zu mindestens 40%, insbesondere zu mindestens 50%, zu Kohlenstoffdioxid umgesetzt ist, und/oder dass die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 20 Gew.-%, insbesondere maximal 10 Gew.-% des ursprünglichen Trockengewichts aufweist, und/oder dass der organische Kohlenstoff der Folie in aktiven Abbaubedingungen gemäß der Methode DIN EN ISO 14855-1:2012 innerhalb von 180 Tagen zu mindestens 70%, zu mindestens 80% oder zu mindestens 90%, in Kohlenstoffdioxid umgesetzt wurde.

9. Verwendung eines Polymerblends enthaltend 10 bis 50 Gew.-% einer Komponente A und 50 bis 90 Gew.-% einer Komponente B, bezogen auf die Summe der Komponenten A und B,
wobei Komponente A ausgewählt ist aus der Gruppe bestehend aus Polymeren, die aus ringöffnender Polymerisation erhältlich sind und eine Glasübergangstemperatur (Tg) niedriger als -30 °C haben und Komponente B ausgewählt ist aus der Gruppe bestehend aus thermoplastischen aliphatischen Copolyestern und Mischungen davon,
zur Herstellung einer Folie mit einer Gesamtdicke von 1 bis 200 um und mindestens einer der folgenden mechanischen Eigenschaften:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527;
wobei die Folie als einschichtige Folie ausgebildet ist, und wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2°C, gemäß der Methode ASTM D6691-09, in Kohlenstoffdioxid umgesetzt sind.

10. Verwendung nach Anspruch 9, **dadurch gekennzeichnet, dass** Komponente A wie in Anspruch 2 definiert ist und/oder dass Komponente B wie in einem der Ansprüche 2 bis 6 definiert ist, und/oder
dass der Polymerblend 20 bis 40 Gew.-%, insbesondere 25 bis 40 Gew.-%, 25 bis 35 Gew.-% oder 28 bis 32 Gew.-% der Komponente A, bezogen auf die Summe der Komponenten A und B, und/oder 60 bis 80 Gew.-%, insbesondere 60 bis 75 Gew.-%, 65 bis 75 Gew.-% oder 68 bis 72 Gew.-% der Komponente B enthält, bezogen auf die Summe der Komponenten A und B.

11. Transportbeutel enthaltend eine Folie gemäß einem der Ansprüche 1 bis 8.

12. Transportbeutel gemäß Anspruch 11, **dadurch gekennzeichnet, dass** der Transportbeutel ausgewählt ist aus der Gruppe bestehend aus Tragetasche, Obstbeutel, Gemüsebeutel, Light T-Shirt Bag und Ultra-Light T-Shirt Bag, und/oder
dass der Transportbeutel ein Gewicht von 1 bis 90 g, 2 bis 50 g, 20 bis 40 g, 1 bis 10 g oder 1,5 bis 5 g aufweist.

13. Verfahren zur Herstellung einer Folie gemäß einem der Ansprüche 1 bis 8, **gekennzeichnet durch** folgende Schritte:
a. Bereitstellen eines Polymerblends enthaltend 10 bis 50 Gew.-% einer Komponente A und 50 bis 90 Gew.-% einer Komponente B, bezogen auf die Summe der Komponenten A und B,
wobei Komponente A ausgewählt ist aus der Gruppe bestehend aus Polymeren, die aus ringöffnender Polymerisation erhältlich sind und eine Glasübergangstemperatur (Tg) niedriger als -30 °C haben und
Komponente B ausgewählt ist aus der Gruppe bestehend aus thermoplastischen aliphatischen Copolyestern und Mischungen davon;
b. Ausbilden einer Folie aus dem Polymerblend gemäß Schritt a,
wobei die Folie als einschichtige Folie ausgebildet ist, wobei die Folie eine Gesamtdicke von 1 bis 200 um sowie mindestens eine der folgenden mechanischen Eigenschaften aufweist:
- Zugfestigkeit in trockenem Zustand in Extrusionsrichtung (MD) von mindestens 15 MPa gemäß EN ISO 527;
- Zugfestigkeit in trockenem Zustand quer zur Extrusionsrichtung (TD) von mindestens 15 MPa gemäß EN ISO 527;
- Reißdehnung in trockenem Zustand in Extrusionsrichtung (MD) von mindestens 100% gemäß EN ISO 527;
- Reißdehnung in trockenem Zustand quer zur Extrusionsrichtung (TD) von mindestens 100% gemäß EN ISO 527;
und
wobei die Folie nach Einbringen in Salzwasser für einen Zeitraum von 12 Wochen unter kontrollierten Testbedingungen, gemäß der Methode ASTM D6691-09, nach Sieben durch ein Sieb mit einer Maschenweite von 2,0 mm maximal 30 Gew.-% des ursprünglichen Trockengewichts aufweist und/oder wobei mindestens 30% des organischen Kohlenstoffs der Folie nach Einbringen in Salzwasser innerhalb von 180 Tagen bei einer Temperatur von 30 ± 2°C, gemäß der Methode ASTM D6691-09, in Kohlenstoffdioxid umgesetzt sind.

14. Verfahren gemäß Anspruch 13, **dadurch gekennzeichnet, dass** das Verfahren einen Coextrusionsschritt umfasst, und/oder
dass das Verfahren einen Kaschierungsschritt umfasst, und/oder
dass Komponente A wie in Anspruch 2 definiert ist und/oder dass Komponente B wie in einem der Ansprüche 2 bis 6 definiert ist, und/oder
dass der Polymerblend 20 bis 40 Gew.-%, insbesondere 25 bis 40 Gew.-%, 25 bis 35 Gew.-% oder 28 bis 32 Gew.-% der Komponente A, bezogen auf die Komponenten A und B, und/oder 60 bis 80 Gew.-%, insbesondere 60 bis 75 Gew.-%, 65 bis 75 Gew.-% oder 68 bis 72 Gew.-% der Komponente B enthält, bezogen auf die Summe der Komponenten A und B.

15. Verwendung einer Folie gemäß einem der Ansprüche 1 bis 8 zur Herstellung eines Transportbeutels.
